# EUROPÄISCHE PATENTSCHRIFT

(11) **EP 3 224 532 B1**
(45) Veröffentlichungstag und Bekanntmachung des Hinweises auf die Patenterteilung: **11.03.2020**
(21) Anmeldenummer: 15797852.9
(22) Anmeldetag: 16.11.2015
(51) Int. Cl.: F21S 41/14, F21S 41/16, F21S 41/663, F21S 41/675, F21S 45/70, G02B 26/08, F21Y 115/30

(54) **BELEUCHTUNGSEINRICHTUNG FÜR EIN KRAFTFAHRZEUG, KRAFTFAHRZEUG MIT EINEM SCHEINWERFER MIT EINER BELEUCHTUNGSEINRICHTUNG UND VERFAHREN ZUM BETREIBEN EINER BELEUCHTUNGSEINRICHTUNG**
LIGHTING MODULE FOR A VEHICLE, VEHICLE WITH A HEADLAMP AND SUCH A LIGHTING MODULE AND METHOD FOR OPERATING SUCH A LIGHTING MODULE
DISPOSITIF D'ÉCLAIRAGE POUR UN VÉHICULE, VÉHICULE AVEC UND PHARE ET UN TEL DISPOSITIF D'ÉCLAIRAGE ET MÉTHODE POUR UTILISER UN TEL DISPOSITIF

(30) Priorität: 27.11.2014 DE 102014017521
(43) Veröffentlichungstag der Anmeldung: 04.10.2017
(73) Patentinhaber: Audi AG, 85045 Ingolstadt (DE)
(72) Erfinder: WILHELMY, Jürgen, 91171 Greding (DE); SPIRA, Susanne, 98693 Ilmenau (DE)
(86) Internationale Anmeldenummer: PCT/EP2015/002288
(87) Internationale Veröffentlichungsnummer: WO 2016/082919

(56) Entgegenhaltungen:
- EP-A1- 2 767 751
- EP-A2- 1 433 655
- WO-A1-2014/121315
- DE-A1-102010 048 659
- US-A1- 2010 208 478
- US-A1- 2011 084 609
- US-A1- 2014 168 940
- US-A1- 2014 204 398

## Beschreibung

Die Erfindung geht aus von einer Beleuchtungseinrichtung für ein Kraftfahrzeug, wobei die Beleuchtungseinrichtung eine Laserlichtquelle aufweist, welche dazu ausgelegt ist, Anregungsstrahlung mit zumindest einer ersten Wellenlänge abzustrahlen und ein Wellenlängenkonversionselement aufweist, das dazu ausgelegt ist, Strahlung mit zumindest der ersten Wellenlänge in Strahlung mit zumindest einer von der ersten Wellenlänge verschiedenen zweiten Wellenlänge zu konvertieren und zu emittieren. Dabei ist die Beleuchtungseinrichtung derart eingereichtet, dass von der Laserlichtquelle abgestrahltes Anregungslicht zumindest zum Teil auf das Wellenlängenkonversionselement trifft. Des Weiteren geht die Erfindung aus von einem Kraftfahrzeug mit einem Scheinwerfer mit einer solchen Beleuchtungseinrichtung und einem Verfahren zum Betreiben einer Beleuchtungseinrichtung.

Aus dem Stand der Technik sind Scheinwerfer für Kraftfahrzeuge bekannt, die als Lichtquellen Laser, insbesondere Laserdioden, verwenden. Üblicherweise wird dabei das Licht der Laserlichtquelle auf ein Wellenlängenkonversionselement bzw. einen Konverter, wie zum Beispiel einen Leuchtstoff, eingestrahlt, das das kohärente, monochromatische Laserlicht in weißes, und nicht mehr kohärentes Licht konvertiert. Das vom Leuchtstoff abgestrahlte Licht wird durch einen Reflektor reflektiert und über die Lichtaustrittsfläche des Scheinwerfers abgestrahlt. Die Verwendung von Laserlichtquellen in Scheinwerfern hat dabei den großen Vorteil, dass sich dadurch viel höhere Beleuchtungsstärken erzielen lassen und zudem sehr bauraumeffiziente Anordnungen möglich sind, da Laserlichtquellen, wie zum Beispiel Laserdioden, sehr kompakt ausgestaltet und angeordnet werden können.

Problematisch bei der Verwendung von Laserlichtquellen ist allerdings, dass Laserlicht für das menschliche Auge sehr gefährlich sein kann. Daher muss sichergestellt sein, dass das Laserlicht nicht aus der Lichtaustrittsfläche des Scheinwerfers austreten kann. Aus dem Stand der Technik sind daher Sicherheitsvorrichtungen bekannt, die Fehlfunktionen von Beleuchtungseinrichtungen mit Laserlichtquellen detektieren können.

Beispielsweise beschreibt die WO 2013/024668 A1 eine Beleuchtungseinrichtung mit einer Vorrichtung zur Detektion von Fehlausrichtungen. Dabei detektiert eine Detektionseinheit die relativen Positionen eines Laserelements, einer fokussierenden Linse und eines Leuchtstoffs. Eine Bestimmungseinheit vergleicht dann die Ergebnisse der Detektionseinheit mit Referenzpositionen für das Laserelement, der fokussierenden Linse und des Leuchtstoffs, um zu bestimmen, ob das Laserelement, die fokussierende Linse und der Leuchtstoff relativ zueinander fehlerhaft ausgerichtet sind. Durch diese Ausgestaltung können lediglich Fehler bei der relativen Ausrichtung einzelner Komponenten der Beleuchtungseinrichtung zueinander detektiert werden, andere Fehlerquellen bleiben dabei jedoch unberücksichtigt. Beispielsweise kann es vorkommen, dass der Leuchtstoff zum Beispiel durch Überhitzung oder durch Bestrahlung mit Anregungsstrahlung mit zu hoher Intensität in Sättigung gerät und damit Laserlicht unkonvertiert emittiert. Dies stellt ein hohes Sicherheitsrisiko dar, da so unkonvertiertes Laserlicht die Beleuchtungseinrichtung verlassen kann, dies jedoch mit der eben beschriebenen Detektionseinrichtung nicht festgestellt werden kann. Ein weiterer Nachteil dieser Beleuchtungseinrichtung besteht zudem noch darin, dass diese Anordnung nur wenig Flexibilität im Bezug auf bereitzustellende Beleuchtungseigenschaften aufweist.

Weitere aus dem Stand der Technik bekannte Sicherheitskonzepte für Laserscheinwerfer sehen z.B. eine Strahlenfalle vor, die in den Reflektorspiegel integriert ist. Im Falle eines Konverterdefekts trifft nicht mehr die konvertierte, diffuse Strahlung auf den Reflektor, sondern die kurzwellige Strahlung der Laserdioden. Da diese stark gebündelt ist, kann die Strahlenfalle so positioniert werden, dass sie die Laserstrahlung in ihrem Auftreffpunkt durch vollständige Absorption unschädlich macht. Der Nachteil dabei ist, dass das Vorhandensein einer Strahlenfalle im Strahlengang einen dauerhaften Verlust von Strahlungsintensität bedeutet. Außerdem muss der Reflektorspiegel nach seiner aufwendigen Fertigung nachträglich manipuliert werden, was neben dem zeitlichen Mehraufwand zu einer Steigerung der Herstellungskosten führt. Zudem schützt diese Maßnahme zur Strahlungsdetektion nur in dem Fall vor der Auskopplung gefährlicher Laserstrahlung, dass ein Defekt des Strahlungskonverters nach wie vor zu einem gerichteten Lichtaustritt in Richtung der Strahlenfalle führt. Tritt jedoch ein Defekt auf, in Folge dessen die Laserstrahlung unkonvertiert und unter einem Winkel den Konverter verlässt, ist die Funktionalität der Strahlenfalle durch ihre unveränderliche Position nicht mehr gegeben. Weiterhin hat auch diese Ausgestaltung den Nachteil, dass sie nur wenig Flexibilität hinsichtlich der bereitzustellenden Beleuchtungseigenschaften des Scheinwerfers bietet.

Ebenso offenbaren EP 2 767 751 A1 und EP 1 433 655 A2 eine Beleuchtungsvorrichtung für ein KFZ mit einem Sicherheitskonzept für die Laserlichtquelle.

Die Aufgabe der vorliegenden Erfindung besteht deshalb darin, eine Beleuchtungseinrichtung für ein Kraftfahrzeug, ein Kraftfahrzeug mit einem Scheinwerfer mit einer solchen Beleuchtungseinrichtung und ein Verfahren zum Betreiben einer Beleuchtungseinrichtung zu verbessern.

Diese Aufgabe wird gelöst durch eine Beleuchtungseinrichtung für ein Kraftfahrzeug, ein Kraftfahrzeug mit einem Scheinwerfer mit einer solchen Beleuchtungseinrichtung und ein Verfahren zum Betreiben einer Beleuchtungseinrichtung gemäß den unabhängigen Ansprüchen. Vorteilhafte Ausgestaltungen der Erfindung finden sich in den abhängigen Ansprüchen.

Die erfindungsgemäße Beleuchtungseinrichtung zeichnet sich nun dadurch aus, dass die Beleuchtungseinrichtung eine Mikrospiegelanordnung mit einer Mehrzahl an Mikrospiegeln aufweist, um vom Wellenlängenkonversionselement emittierte Strahlung zu reflektieren, wobei die Mikrospiegel relativ zum Wellenlängenkonversionselement bewegbar angeordnet sind.

Durch die bewegbare Anordnung der Mikrospiegel hat die Erfindung, im Gegensatz zu den ausschließlich statisch ausgebildeten Laserscheinwerfern gemäß dem Stand der Technik, den großen Vorteil, dass eine dynamische und hoch aufgelöste Lichtlenkung ermöglicht wird. Bislang war es nicht möglich, die Beleuchtungsstärkeverteilung des Laserscheinwerfers beispielsweise an den Fahrbahnverlauf oder andere Verkehrsteilnehmer anzupassen. Die Erfindung dagegen stellt diese Möglichkeit bereit und ermöglicht damit eine besonders hohe Flexibilität hinsichtlich der Beleuchtungseigenschaften der Beleuchtungseinrichtung. Zudem wird durch das Vorsehen einer Mikrospiegelanordnung mit einer Mehrzahl an bewegbar angeordneten Mikrospiegeln eine hoch aufgelöste Fehlerdetektion auf sehr einfache Weise ermöglicht, wie später noch näher beschrieben ist. Nachteile von statischen Erfassungsmitteln zur Fehlerdetektion oder statischen Strahlenfallen können beispielsweise in Kombination mit bewegbar angeordneten Mikrospiegeln umgangen werden, da bewegbar angeordnete Mikrospiegel es vorteilhafterweise ermöglichen, die vom Wellenlängenkonversionselement emittierte Strahlung an jede beliebige, vorbestimmte Stelle, je nach Einstellung der Mikrospiegel, zu reflektieren. Die Mikrospiegelanordnung stellt damit ein deutlich höheres Maß an Flexibilität hinsichtlich gewünschter Beleuchtungsstärkeverteilungen als auch Verbesserungen hinsichtlich der Sicherheit bereit.

Die Mikrospiegelanordnung kann beispielsweise als ein Digital Micromirror Device (DMD) mit einer Vielzahl an, insbesondere ebenen, Mikrospiegeln als Teil eines Digital Light Processing (DLP)-Elements ausgebildet sein. Weiterhin ist es bevorzugt, dass die Mikrospiegel nicht translatorisch bewegbar, sondern lediglich rotatorisch bewegbar sind, zum Beispiel schwenkbar, drehbar bzw. kippbar, vorteilhafterweise um eine Drehachse, bevorzugt um eine zu einer Flächennormalen des jeweiligen Mikrospiegels senkrechte Drehachse. Auch wäre es denkbar, die Mikrospiegelanordnung derart auszubilden, dass diese auch um mehrere, zum Beispiel zwei, drei, vier oder fünf Drehachsen drehbar sind, jedoch lassen sich durch nur eine Drehachse vielzählige verschieden vorteilhafte Ausgestaltungen auf besonders einfache Weise realisieren. Weiterhin können auch mehrere Laserlichtquellen, bevorzugt Laserdioden, wie z.B. 5 bis 15 Laserlichtquellen, vorgesehen sein, um eine möglichst homogene Anregung des Wellenlängenkonversionselements zu bewerkstelligen.

Bei einer vorteilhaften Ausgestaltung der Erfindung ist die Beleuchtungseinrichtung derart eingerichtet, dass die Mikrospiegel unabhängig voneinander bewegbar sind, insbesondere wiederum bewegbar im Sinne von schwenkbar, drehbar oder rotierbar. Diese Ausgestaltung ermöglicht vorteilhafter Weise vielzählige und flexible Möglichkeiten bezüglich der Erzeugung gewünschter Beleuchtungsstärkeverteilungen mittels der Beleuchtungseinrichtung. Die durch die Beleuchtungseinrichtung bereitgestellten Beleuchtungsstärkeverteilungen sind damit situativ anpassbar und ermöglichen beispielsweise Anpassungen an den Fahrbahnverlauf oder an andere Verkehrsteilnehmer auf besonders einfache Weise. Die Ausbildung mit unabhängig voneinander bewegbaren Mikrospiegeln ermöglicht zudem, wie später noch näher beschrieben, eine sehr hoch aufgelöste Fehlerdetektion, die nicht nur darüber Aufschluss gibt, dass ein Fehler vorliegt, sondern auch, worauf dieser Fehler zurückzuführen sein könnte. Dabei kann es vorgesehen sein, dass alle Mikrospiegel paarweise unabhängig voneinander bewegbar sind oder auch, dass die Mirkospiegel gruppenweise unabhängig voneinander bewegbar sind, d.h. dass mehrere Mikrospiegel zu einer Gruppe, die insbesondere einen zusammenhängenden Teilbereich der Mikrospiegelanordnung bildet, und die Mikrospiegel verschiedener Gruppen unabhängig voneinander bewegbar sind, jedoch Mikrospiegel der selben Gruppe nur im Kollektiv gleichartig bewegbar sind. Diese Ausgestaltung vereinfacht die Aktorik zur Bewegung der Mikrospiegel und die Ansteuerung dieser.

Daher ist es eine bevorzugte Ausgestaltung der Erfindung, dass die Beleuchtungseinrichtung derart eingerichtet ist, dass die Mikrospiegelanordnung in mehrere Ansteuerbereiche, die jeweils mehrere der Mikrospiegel umfassen, unterteilt ist, so dass die in einem selben Ansteuerbereich befindlichen Mikrospiegel kollektiv, insbesondere nur kollektiv, z.B. durch eine Steuereinrichtung der Beleuchtungseinrichtung, ansteuerbar sind, um eine Position der Mikrospiegel eines Ansteuerbereichs einzustellen und/oder zu ändern. Damit wird es realisiert, dass die Mirkospiegel, wie oben beschreiben, gruppenweise unabhängig voneinander bewegbar sind. Die Ansteuerbereiche korrespondieren dabei zu den oben beschriebenen Teilbereichen der Mikrospiegelanordnung. Durch diese Ausgestaltung wird es vorteilhafterweise ermöglicht, dass zu Ansteuerung der Mehrzahl an Mikrospiegeln, die einem selben Ansteuerbereich zugeordnet sind bzw. sich in diesem befinden, durch ein einziges, gemeinsames Ansteuersignal ansteuerbar sind, um ein kollektives Bewegen der Mikrospiegel in eine bestimmte Position bzw. das Einstellen einer Position der Mikrospiegel zu bewirken. Beispielsweise kann die Mirkospiegelanordnung zwischen 300 000 und 600 000 einzelner Mikrospiegel umfassen, die dann bevorzugt zu einer Anzahl an Ansteuerbereichen zusammengefasst sind, die um mindesten zwei Größenordnungen kleiner ist als die Gesamtanzahl an Mikrospiegeln, also z.B. 200 bis 2000 Ansteuerbereiche. Auf diese Weise kann die Ansteuerlogik enorm vereinfacht, der zur Ansteuerung erforderliche Datenverkehr deutlich reduziert und dennoch eine sehr hochaufgelöste Ansteuermöglichkeit bereitgestellt werden.

Bei einer weiteren vorteilhaften Ausgestaltung der Erfindung weist die Beleuchtungseinrichtung eine Steuereinrichtung auf, die dazu ausgelegt ist, die Mikrospiegel im Betrieb der Beleuchtungseinrichtung in Abhängigkeit von einer vorbestimmten, zeitlich variablen und mittels der Beleuchtungseinrichtung zu erzeugenden Beleuchtungsstärkeverteilung in ihrer jeweiligen Position relativ zum Wellenlängenkonversionselement einzustellen. Damit kann vorteilhafterweise durch die Beleuchtungseinrichtung eine Beleuchtungsstärkeverteilung bereitgestellt werden, die zum Beispiel an den Fahrbahnverlauf oder an andere Verkehrsteilnehmer angepasst ist. Die Einstellung der Mikrospiegel mittels der Steuereinrichtung ist dabei bevorzugt dergestalt, dass die Mikrospiegel zumindest gruppenweise separat, das heißt unabhängig voneinander, in ihrer jeweiligen Position einstellbar sind. Dadurch lassen sich vielzählige unterschiedliche Beleuchtungsstärkeverteilungen bereitstellen. Bei-spielsweise kann es vorgesehen sein, dass eine Erfassungseinrichtung eines Kraftfahrzeugs mit einer solchen Beleuchtungseinrichtung Informationen über einen Fahrbahnverlauf und/oder andere Verkehrsteilnehmer bereitstellt und in Abhängigkeit von dieser Information eine Beleuchtungsstärkeverteilung durch die Steuereinrichtung vorbestimmt wird, in Abhängigkeit von welcher die Steuereinrichtung die jeweiligen Mikrospiegel der Mikrospiegelanordnung in ihrer jeweiligen Position einstellt, um die vorbestimmte Beleuchtungsstärkeverteilung zu erzeugen. Auch vielzählige weitere Ausgestaltungen hinsichtlich der zu erzeugenden Beleuchtungsstärkeverteilungen sind denkbar, und werden insbesondere auch erst durch die Möglichkeit der hochaufgelösten Lichtlenkung, die durch die Mikrospiegelanordnung bereitgestellt wird, ermöglicht. Beispielsweise kann es vorgesehen sein, dass einem Fahrer durch die Beleuchtungseinrichtung eine Ideallinie, die zu befahren ist, und beispielsweise aus Navigationsdaten bereitgestellt werden kann, auf der Fahrbahn als Lichtmarkierung durch eine entsprechende Beleuchtungsstärkeverteilung angezeigt wird. Weiterhin kann auch die aktuelle Fahrlinie in entsprechender Weise angezeigt werden, z.B. auch eine aktuelle, vorausprojizierte Fahrlinie mit Fahrzeugbreite, so dass einem Fahrer bei enger Fahrbahn, wie z.B. in einer Baustelle, der zum Befahren benötigte Fahrbahnbereich angezeigt wird und der Fahrer somit die Situation besser einschätzen kann. Weiterhin können auch weitere Informationen durch die Beleuchtungseinrichtung in besonders hochaufgelöster Weise und mit sehr hohem Kontrast auf der Fahrbahn angezeigt werden, wie z.B. Navigationsinformationen wie Abbiegepfeile, situationsbedingte Warnhinweise, Hinweise auf bestimmte Verkehrssituationen, Symbole, usw..

Um dies zu bewerkstelligen, können nun mehrere einstellbare Positionen eines jeweiligen Mikrospiegels vorbestimmt sein. Dazu sieht es eine vorteilhafte Ausgestaltung der Erfindung vor, dass die Beleuchtungseinrichtung derart eingerichtet ist, dass sich ein jeweiliger Mikrospiegel in einem ersten Zustand in einem dem jeweiligen Mikrospiegel zugeordneten ersten Positionsbereich befindet, wobei der jeweilige Mikrospiegel im ersten Positionsbereich derart angeordnet ist, dass er bei funktionsgemäßem Betrieb der Beleuchtungseinrichtung vom Wellenlängenkonversionselement emittierte und auf den Mikrospiegel auftreffende Strahlung zum Großteil, insbesondere zu mindestens 90% oder auch vollständig bis auf unvermeidbare Strählungsverluste, und zumindest mittelbar in eine vorbestimmte erste Richtung, insbesondere zu einer Austrittsöffnung der Beleuchtungseinrichtung, reflektiert. Zumindest mittelbar ist hierbei so zu verstehen, dass durch den Mikrospiegel reflektierte Strahlung entweder direkt zu einer Austrittsöffnung der Beleuchtungseinrichtung, das heißt ohne weitere optische Elemente, gelenkt wird oder, dass die reflektierte Strahlung ein oder mehrere weitere optische Elemente durchlaufen kann, oder von diesen reflektiert werden kann, bevor diese letztendlich durch die Austrittsöffnung der Beleuchtungseinrichtung austritt. Bevorzugt sind dabei ein oder mehrere optische Elemente, wie z.B. Linsen oder auch Reflektoren, im Strahlengang der Mikrospiegelanordnung nachgeordnet, um gewünschte Abbildungseigenschaften der Beleuchtungseinrichtung bereitzustellen. Weiterhin ist ein funktionsgemäßer Betrieb der Beleuchtungseinrichtung als ein defektfreier Betrieb der Beleuchtungseinrichtung zu verstehen.

Dieser erste Zustand eines jeweiligen Mikrospiegels entspricht dabei einem Ein-Zustand, in dem sich der jeweilige Mikrospiegel in einer Ein-Position bzw. in einem Ein-Positionsbereich, dem ersten Positionsbereich, der auch nur eine einzeige Position umfassen kann, befindet und er um einen vorbestimmten Winkel, wie beispielsweise 10° bis 12°, um seine Drehachse gedreht ist, d.h. die Flächennormale des Mikrospiegels ist gegenüber der Haupteinstrahlrichtung der vom Wellenlängenkonversionselement emittierten und auf den Mikrospiegel einfallenden Strahlung um einen Winkel, z.B. 10° bis 12 °, gedreht.

Des Weiteren ist es vorteilhaft, wenn die Beleuchtungseinrichtung derart eingerichtet ist, dass sich ein jeweiliger Mikrospiegel in einem zweiten, vom ersten verschiedenen Zustand in einem dem jeweiligen Mikrospiegel zugeordneten zweiten Positionsbereich, der vom ersten Positionsbereich verschieden ist, befindet, wobei der jeweilige Mikrospiegel im zweiten Positionsbereich derart angeordnet ist, dass bei funktionsgemäßen Betrieb der Beleuchtungseinrichtung vom Wellenlängenkonversionselement emittierte und auf den Mikrospiegel auftreffende Strahlung mittels des Mikrospiegels zum Großteil, insbesondere zu mindestens 90% oder auch vollständig bis auf unvermeidbare Strahlungsverluste, in eine zweite von der ersten verschiedene vorbestimmte Richtung, insbesondere nicht zu der Austrittsöffnung der Beleuchtungseinrichtung reflektierbar ist, sondern zum Beispiel auf einen Absorber. Dieser zweite Zustand entspricht dabei einem Aus-Zustand eines jeweiligen Mikrospiegels, in welchem sich der Mikrospiegel in einer Aus-Position bzw. einem Aus-Positionsbereich, dem zweiten Positionsbereich, der auch nur eine einzige zweite Position umfassen kann, befindet. Diese Aus-Position kann beispielsweise dadurch definiert sein, dass der betreffende Mikrospiegel in der Aus-Position um einen vorbestimmten Winkel, wie zum Beispiel 10 bis 12°, um seine Drehachse gedreht ist, jedoch in entgegengesetzte Drehrichtung im Vergleich zur Ein-Position.

Durch diese beiden Positionen bzw. Positionsbereiche ist festgelegt, ob das an den jeweiligen Mikrospiegeln reflektierte Licht aus der Beleuchtungseinrichtung austritt oder nicht und zum Beispiel von einen Absorber absorbiert wird. Dabei ist bevorzugt jeder Mikrospiegel einzeln in seiner Position einstellbar oder die Mikrospiegel zumindest gruppenweise in ihrer Position einstellbar, so dass sich durch eine Variation der Anzahl der sich in der Ein-Position und der Aus-Position befindlichen Mikrospiegel, sowie insbesondere welche der Mikrospiegel sich in der Ein- bzw. Aus-Position befinden, vielzählige unterschiedliche und anpassbare Beleuchtungsstärkeverteilungen mittels der Beleuchtungseinrichtung bereitstellen lassen.

Erfindungsgemäß ist die Beleuchtungseinrichtung derart eingerichtet, dass die jeweiligen Mikrospiegel zumindest zeitweise vom jeweiligen ersten Positionsbereich und/oder zweiten Positionsbereich in einen dritten, vom ersten und zweiten Positionsbereich verschiedenen Positionsbereich bewegt werden, wobei ein jeweiliger Mikrospiegel im dritten Positionsbereich derart angeordnet ist, dass er bei funktionsgemäßem Betrieb der Beleuchtungseinrichtung vom Wellenlängenkonversionselement emittierte und auf den Mikrospiegel auftreffende Strahlung zum Großteil, insbesondere zu mindestens 90% oder auch vollständig bis auf unvermeidbare Strahlungsverluste, und zumindest mittelbar auf eine Sensoreinrichtung der Beleuchtungseinrichtung reflektiert.

Durch diesen dritten Positionsbereich, zusätzlich zu dem ersten und zweiten Positionsbereich, ist auf besonders vorteilhafte Weise eine Sicherheitsposition bereitgestellt. Die Mikrospiegel der Mikrospiegelanordnung können somit von Zeit zu Zeit, insbesondere regelmäßig, in die dritte Position gebracht werden, in welcher sie vom Wellenlängenkonversionselement emittiertes Licht auf eine Sensoreinrichtung reflektieren, mittels welcher vorteilhafterweise z.B. die Zusammensetzung der Strahlung überprüft werden kann bzw. die auf die Sensoreinrichtung gelenkte und auftreffende Strahlung auf eventuelle Anteile nichtkonvertierter Laserstrahlung überprüft werden kann. Defekte der Beleuchtungseinrichtung können so auf besonders einfache und vorteilhafte Weise erkannt werden und entsprechende Maßnahmen zur Verhinderung eines Austretens von unkonvertiertem Laserlicht aus der Beleuchtungseinrichtung eingeleitet werden.

Bei einer vorteilhaften Ausgestaltung der Erfindung ist die Sensoreinrichtung dazu ausgelegt, einen aktuellen Wert einer physikalischen Größe der auf die Sensoreinrichtung auftreffenden Strahlung und/oder als Größe zumindest eine durch die auftreffende Strahlung hervorgerufene Wirkung, wie z.B. ein Potostrom einer Photodiode, zu erfassen und zu überprüfen, ob der Wert innerhalb eines vorbestimmten Wertebereichs liegt, wobei insbesondere die Sensoreinrichtung mit der Steuereinrichtung gekoppelt ist und die Steuereinrichtung dazu ausgelegt ist, die Laserlichtquelle zu deaktivieren, falls ein aktuell erfasster Wert nicht innerhalb des vorbestimmten Wertebereichs liegt. Die physikalische Größe kann dabei beispielsweise eine radiometrische Größe der auftreffenden Strahlung, wie zum Beispiel die Strahlungsstärke oder die Bestrahlungsstärke, oder auch eine photometrische Größe, wie zum Beispiel die Lichtstärke oder die Beleuchtungsstärke, darstellen. Weiterhin ist es bevorzugt, dass die Sensoreinrichtung eine Photodiode umfasst. Durch eine Messung des durch die Lichteinstrahlung hervorgerufenen Photostroms der Photodiode können die eben genannten physikalischen Größen auf besonders einfache und vor allem schnelle Art und Weise erfasst werden und zur Überprüfung der Strahlungszusammensetzung genutzt werden. Überschreitet beispielsweise die erfasste Strahlungsstärke, Bestrahlungsstärke, Lichtstärke oder Beleuchtungsstärke einen vorbestimmten Grenzwert, so lässt sich darauf schließen, dass die auf die Mikrospiegel auftreffende Strahlung nicht nur vom Wellenlängenkonversionselement konvertierte und emittierte Strahlung, sondern auch unkonvertierte Laserstrahlung umfasst. Dies kann beispielsweise dann der Fall sein, wenn der Leuchtstoff in Sättigung gerät oder sich die relativen Positionen der einzelnen Elemente wie Laserdioden, Leuchtstoff, der Mikrospiegelanordnung oder andere weitere optische Elemente zueinander verändern. Darüber hinaus kann auch auf einen Defekt der Beleuchtungseinrichtung geschlossen werden, wenn die erfasste physikalische Größe, wie die Strahlungsstärke, Bestrahlungsstärke, Lichtstärke oder Beleuchtungsstärke, einen vorbestimmten Grenzwert unterschreitet. Dies kann beispielsweise ebenso der Fall sein, wenn sich die relativen Positionen der Laserdioden, des Leuchtstoffs, der Mikrospiegelanordnung oder weiterer optischer Elemente zueinander verändert, so dass beispielsweise die Anregungsstrahlung der Laserlichtquelle nicht mehr auf den Leuchtstoff trifft, was unmittelbar zu einer verringerten, durch den Leuchtstoff bereitgestellten Strahlungsstärke, Bestrahlungsstärke, Lichtstärke und Beleuchtungsstärke führt. So können insgesamt auf besonders einfache und effiziente Weise alle möglichen Formen möglicher Defekte der Beleuchtungseinrichtung detektiert werden.

Bei einer weiteren vorteilhaften Ausgestaltung der Erfindung ist die Mikrospiegelanordnung in mehrere Teilbereiche gegliedert, wobei jeder Teilbereich mindestens einen Mikrospiegel umfasst, wobei die Steuereinrichtung dazu ausgelegt ist, die Mikrospiegelanordnung derart anzusteuern, dass die Mikrospiegel unterschiedlicher Teilbereiche zeitlich voneinander versetzt vom ersten Positionsbereich und/oder zweiten Positionsbereich für eine vorbestimmte Zeitdauer in den dritten Positionsbereich bewegt werden. Mit anderen Worten ist es besonders vorteilhaft, wenn nicht alle Mikrospiegel der Mikrospiegelanordnung gleichzeitig in die dritte Position bewegt werden, sondern die der jeweiligen Teilbereiche der Mikrospiegelanordnung in einer vorbestimmten Abfolge, z.B. die eines ersten Teilbereichs, dann die eines zweiten Teilbereichs, usw.. Dadurch lassen nämlich nicht nur Defekte detektieren, sondern es lassen sich Defekte sogar in einer hochauflösenden Weise detektieren. Beispielsweise können dadurch eventuelle Konvertierungsdefekte des Wellenlängenkonversionselements mit einer hohen Auflösung genau lokalisiert werden, da durch das Vorsehen einzelner Teilbereiche der Mikrospiegelanordnung ermittelt werden kann, durch welchen dieser Teilbereiche Strahlung auf die Sensoreinrichtung reflektiert wird, die auf einen Defekt schließen lässt, wobei durch den betreffenden Teilbereich Rückschlüsse gezogen werden können, aus welchem Bereich des Wellenlängenkonversionselements die durch diesen Teilbereich reflektierte Strahlung stammt. Damit kann insgesamt besonders schnell auf die Detektion eines Defekts reagiert werden, beispielsweise indem die Laserlichtquellen abgeschaltet werden, und andererseits können Defekte auch sehr schnell lokalisiert werden, was die Behebung der betreffenden Defekte deutlich vereinfacht.

Des Weiteren betrifft die Erfindung ein Kraftfahrzeug mit einem Scheinwerfer, der eine erfindungsgemäße Beleuchtungseinrichtung oder eine ihrer Ausgestaltungen aufweist. Die für die erfindungsgemäße Beleuchtungseinrichtung und ihre Ausgestaltungen genannten Vorteile gelten somit in gleicher Weise für das erfindungsgemäße Kraftfahrzeug.

Bevorzugt weist das Kraftfahrzeug gemäß einer Ausgestaltung der Erfindung eine Erfassungseinrichtung auf, die dazu ausgelegt ist, Informationen über einen Fahrbahnverlauf und/oder andere Verkehrsteilnehmer und/oder eine aktuell befahrene Fahrspur und/oder eine aktuelle Verkehrssituation und/oder eine Fehlfunktion des Kraftfahrzeugs und/oder eine sicherheitskritische Situation zu erfassen und der Beleuchtungseinrichtung bereitzustellen, wobei die Beleuchtungseinrichtung dazu ausgelegt, ist in Abhängigkeit von der bereitgestellten Information eine Beleuchtungsstärkeverteilung durch eine korrespondierende Einstellung der Mirkospiegel in ihrer Position derart bereitzustellen, dass eine zu befahrende Ideallinie und/oder eine aktuelle, zu erwartende Fahrlinie und/oder Navigationsinformationen und/oder Warnhinweise und/oder Hinweise auf eine aktuelle Verkehrssituation und/oder Symbole und/oder eine auf vorausfahrende Fahrzeuge und/oder den Fahrbahnverlauf angepasste Beleuchtungsstärkeverteilung auf eine aktuell befahrene Fahrbahn projiziert wird. Somit können vorteilhafterweise viele für den Fahrer relevante und insbesondere auch sicherheitsrelevante Informationen dynamisch, situationsangepasst, auf besonders hochaufgelöste Weise und mit sehr hohem Kontrast auf der Fahrbahn angezeigt werden.

Weiterhin betrifft die Erfindung ein Verfahren zum Betreiben einer Beleuchtungseinrichtung für ein Kraftfahrzeug, wobei die Beleuchtungseinrichtung eine Laserlichtquelle aufweist, die im Betrieb der Beleuchtungseinrichtung Anregungsstrahlung mit zumindest einer ersten Wellenlänge abstrahlt. Weiterhin weist die Beleuchtungseinrichtung ein Wellenlängenkonversionselement auf, das auf das Wellenlängenkonversionselement auftreffende Strahlung mit zumindest der ersten Wellenlänge in Strahlung mit zumindest einer von der ersten Wellenlänge verschiedenen zweiten Wellenlänge konvertiert und emittiert. Dabei ist die Beleuchtungseinrichtung derart eingerichtet, dass das von der Laserlichtquelle abgestrahlte Anregungslicht zumindest zum Teil auf das Wellenlängenkonversionselement trifft. Das erfindungsgemäße Verfahren zeichnet sich nun dadurch aus, dass die Beleuchtungseinrichtung eine Mikrospiegelanordnung mit einer Mehrzahl von Mikrospiegeln aufweist, um vom Wellenlängenkonversionselement emittierte Strahlung zu reflektieren, wobei die Mikrospiegel im Betrieb der Beleuchtungseinrichtung relativ zum Wellenlängenkonversionselement bewegt werden. Auch hier gelten die für die erfindungsgemäße Beleuchtungseinrichtung und ihre Ausgestaltungen genannten Merkmale, Merkmalskombinationen und deren Vorteile in gleicher Weise für das erfindungsgemäße Verfahren zum Betreiben einer Beleuchtungseinrichtung. Weiterhin ermöglichen die in Zusammenhang mit der erfindungsgemäßen Beleuchtungseinrichtung und ihren Ausgestaltungen genannten gegenständlichen Merkmale die Weiterbildungen des erfindungsgemäßen Verfahrens durch weitere Verfahrensschritte.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Dabei zeigen:
- Fig. 1: eine schematische Darstellung einer Beleuchtungseinrichtung mit einer Mikrospiegelanordnung, deren Mikrospiegel sich in ei-ner Aus-Position befinden, gemäß einem Ausführungsbeispiel der Erfindung;
- Fig. 2: eine schematische Darstellung der Beleuchtungseinrichtung gemäß Fig. 1, deren Mikrospiegel sich in einer Ein-Position be-finden;
- Fig. 3: eine schematische Darstellung einer Beleuchtungseinrichtung gemäß Fig. 1 und Fig. 2, deren Mikrospiegel sich in einer Si-cherheitsposition befinden; und
- Fig. 4: eine schematische Darstellung einer Mikrospiegelanordnung einer Beleuchtungseinrichtung, gemäß einem Ausführungsbei-spiel der Erfindung.

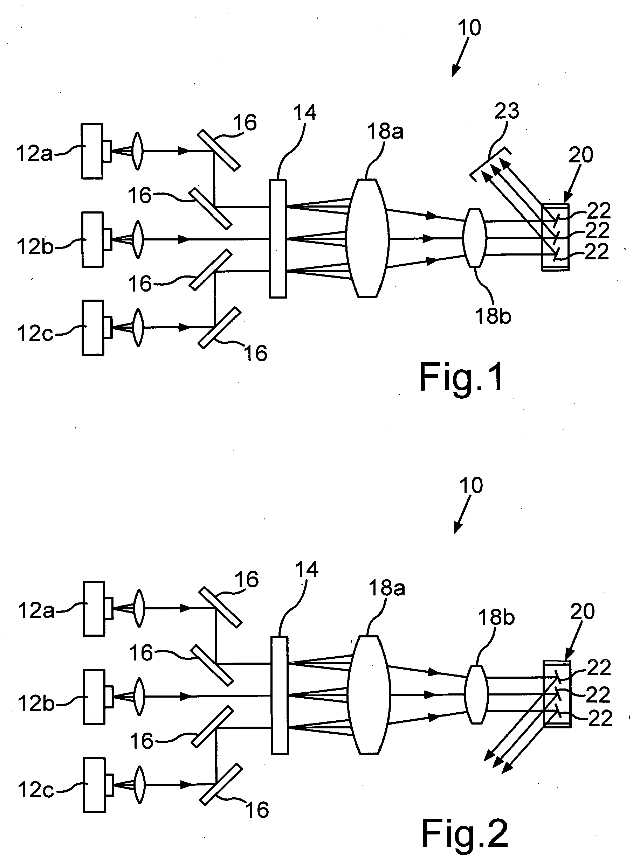

Fig. 1, Fig. 2 und Fig. 3 zeigen eine schematische Darstellung einer Beleuchtungseinrichtung 10 gemäß einem Ausführungsbeispiel der Erfindung. Die Beleuchtungseinrichtung 10 weist hierbei exemplarisch drei Laserlichtquellen 12a, 12b und 12c auf, die jeweils dazu ausgelegt sind, Anregungsstrahlung mit zumindest einer ersten Wellenlänge abzustrahlen. Die Laserlichtquellen 12a, 12b und 12c sind dabei bevorzugt als Laserdioden ausgebildet, mittels welchen kohärentes und nahezu monochromatisches Licht, zum Beispiel im blauen oder UV-Bereich, wie z.B. bei 450 nm, emittierbar ist. Darüber hinaus können auch mehr oder weniger als drei Laserlichtquellen vorgesehen sein und die Laserlichtquellen können beispielsweise in Form eines Arrays angeordnet sein, z.B. als Laserdioden-Array reihen- und spaltenartig.

Weiterhin weist die Beleuchtungseinrichtung 10 ein als Leuchtstoff 14 ausgebildetes Wellenlängenkonversionselement auf, das dazu ausgelegt ist, Strahlung mit zumindest der ersten Wellenlänge in Strahlung mit zumindest einer von der ersten Wellenlänge verschiedenen zweiten Wellenlänge zu konvertieren. Insbesondere ist dieser Leuchtstoff 14 dazu ausgebildet, die von den Laserdioden 12a, 12b und 12c emittierte Anregungsstrahlung in im Wesentlichen weißes Licht, das heißt Licht mit vielzähligen unterschiedlichen Wellenlängen in einem sehr breiten Wellenlängenbereich, insbesondere im sichtbaren Wellenlängenbereich, zu konvertieren und zu emittieren. Auch hierbei kann entweder nur eine Leuchtstoffeinheit vorgesehen sein, auf die die Anregungsstrahlung der Laserlichtquellen 12a, 12b, 12c gelenkt wird oder es können auch mehrere separate Leuchtstoffeinheiten vorgesehen sein, insbesondere so dass z.B. die Anregungsstrahlung einer jeweiligen Laserlichtquelle 12a, 12b, 12c auf eine jeweilige Leuchtstoffeinheit gelenkt wird.

Um das von den Laserdioden 12a, 12b, 12 ausgesandte Licht auf den Leuchtstoff 14 zu lenken, sind weiterhin mehrere optische Elemente, in diesem Fall Umlenkspiegel 16, vorgesehen. Darüber hinaus können auch weitere optische Elemente für den Strahlengang zwischen den Laserdioden 12a, 12b, 12c und dem Leuchtstoff 14 optional angeordnet sein, wie z.B. weitere Spiegel, Reflektoren, Linsen, Strahlteiler, usw.. Das vom Leuchtstoff 14 konvertierte und emittierte Licht wird von einem oder mehreren weiteren optischen Elementen kollimiert. In diesem Beispiel sind dafür zwei Linsen 18a und 18b, insbesondere Sammellinsen, vorgesehen. Alternativ oder zusätzlich können auch hier wiederum weitere zusätzliche optische Elemente, insbesondere kollimierende optische Elemente, wie zum Beispiel auch optisch nicht abbildende Kollimatoren, zum Beispiel Parabolspiegel, oder optisch abbildende Kollimatoren, wie Linsen und Linsenanordnungen, oder auch Kombinationen hieraus vorgesehen sein. Im Strahlengang des zu kollimierten Strahlenbündels ist nun eine Mikrospiegelanordnung 20 angeordnet. Diese Mikrospiegelanordnung 20 ist dabei bevorzugt als ein Digital Micromirror Device (DMD) eines Digital Light Processing (DLP)-Elements der Beleuchtungseinrichtung 10 ausgebildet. Die Mikrospiegelanordnung 20 umfasst dabei eine Vielzahl einzelner, insbesondere ebener Mikrospiegel 22, von denen hier exemplarisch nur drei dargestellt sind. Die Mikrospiegel 22 sind dabei bewegbar, insbesondere rotatorisch bewegbar, angeordnet und bevorzugt um eine Achse, hier eine senkrecht zur Bildebene stehende Achse, drehbar.

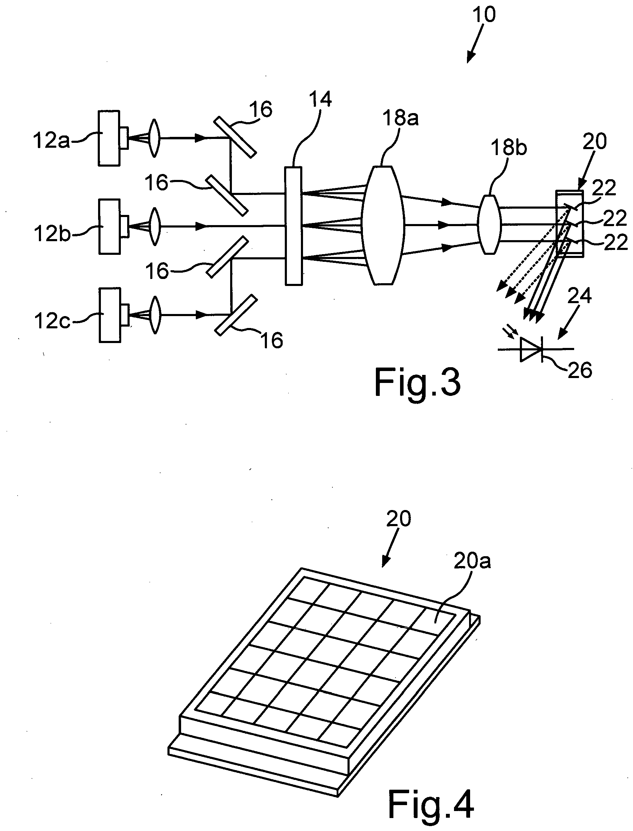

Durch das Vorsehen einer Mikrospiegelanordnung 20 mit bewegbaren Mikrospiegeln 22 lassen sich in vorteilhafter Weise eine Vielzahl von Vorteilen, insbesondere gegenüber der herkömmlichen Verwendung eines statisch angeordneten Reflektorspiegels, erzielen. Zum einen wird hierdurch die Möglichkeit bereitgestellt, vielzählige unterschiedliche Beleuchtungsstärkeverteilungen, die beispielsweise an einen Fahrbahnverlauf oder andere Verkehrsteilnehmer angepasst sein können, umzusetzen. Zum anderen wird hierdurch auch eine besonders einfache, effektive, kostengünstige und vor allem sichere Möglichkeit der Fehlerdetektion der Beleuchtungseinrichtung 10 bereitgestellt. Dazu ist es vorgesehen, dass die Mikrospiegel 22 in zumindest drei unterschiedliche Positionen einstellbar sind, nämlich eine Aus-Position, wie in Fig. 1 dargestellt, eine Ein-Position, wie in Fig. 2 dargestellt, und eine Sicherheitsposition, wie in Fig. 3 dargestellt.

In der Aus-Position sind die Mikrospiegel 22 derart ausgerichtet, dass die vom Leuchtstoff 14 emittierte und auf die Mikrospiegel 22 einfallende Strahlung in eine erste Richtung reflektiert wird, und insbesondere mittelbar oder unmittelbar auf einen Absorber 23 gelenkt wird, das heißt nicht aus einer Austrittsöffnung der Beleuchtungseinrichtung austritt. Die Austrittsöffnung der Beleuchtungseinrichtung kann dabei in einem Gehäuse der Beleuchtungseinrichtung vorgesehen sein und/oder kann eine Austrittsöffnung eines Scheinwerfers eines Kraftfahrzeugs, der diese Beleuchtungseinrichtung aufweist, darstellen.

In der Ein-Position sind die Mikrospiegel 22 derart ausgerichtet, dass die vom Leuchtstoff 14 emittierte und auf die Mikrospiegel 22 einfallende Strahlung in eine von der ersten Richtung verschiedene zweite Richtung reflektiert wird und mittelbar oder unmittelbar so gelenkt wird, dass diese aus einer Austrittsöffnung der Beleuchtungseinrichtung 20 austritt. Zur Vereinfachung der Darstellung und zu einer einfacheren Veranschaulichung sind in Fig. 1 alle Mikrospiegel 22 in der Aus-Position dargestellt, und in Fig. 2 alle Mikrospiegel 22 in der Ein-Position dargestellt, jedoch ist die Beleuchtungseinrichtung 10 bevorzugt derart ausgebildet, dass einzelne Mikrospiegel 22 oder zumindest einzelne Bereiche der Mikrospiegelanordnung 20, unabhängig voneinander ansteuerbar und damit unabhängig voneinander in ihren Positionen einstellbar sind. Ein Teil der Mehrzahl an Mikrospiegeln 22 kann sich so in einer Ein-Position befinden, während sich ein anderer Teil der Mehrzahl an Mikrospiegeln 22 in einer Aus-Position befindet. Je nachdem welche und wie viele Mikrospiegel 22 in der Ein- bzw. Aus-Position eingestellt sind, lassen sich unterschiedliche Beleuchtungsstärkeverteilungen durch die Beleuchtungseinrichtung 10 bereitstellen. Alternativ kann es auch vorgesehen sein, dass die Mikrospiegel 22 nur kollektiv bewegbar sind, d.h. nicht unabhängig voneinander. Dies stellt eine sehr einfache Ausbildung der Mikrospiegelanordnung 20 bereit und dennoch lassen sich unterschiedliche Beleuchtungsstärkeverteilungen bereitstellen, z.B. durch unterschiedlich langes Verharren in der Ein- bzw. Aus-Position, wodurch sich Helligkeitsmodulationen bereitstellen lassen.

Besonders vorteilhaft ist nun, dass zusätzlich zu diesen beiden Positionen eine weitere dritte Position, die Sicherheitsposition, wie in Fig. 3 dargestellt, vorgesehen ist. Befinden sich die Mikrospiegel 22 in der Sicherheitsposition, so sind diese so ausgerichtet, dass die vom Leuchtstoff 14 emittierte und auf die Mikrospiegel 22 auftreffende Strahlung in eine dritte Richtung, die insbesondere von der ersten und zweiten Richtung verschieden ist, reflektiert wird. Die so reflektierte Strahlung wird mittelbar oder unmittelbar auf eine Sensoreinrichtung 24 gelenkt. Diese Sensoreinrichtung 24 kann beispielsweise eine oder mehrere Photodioden 26 aufweisen. Durch die Sensoreinrichtung 24 kann die auftreffende Strahlung auf ihre Zusammensetzung hin überprüft werden. Dazu kann die Sensoreinrichtung 24 ausgelegt sein, eine oder mehrere radiometrische oder photometrische Größen der auftreffenden Strahlung zu messen, wie beispielsweise die Strahlungsintensität bzw. Strahlungsstärke und/oder die Lichtstärke und/oder die Beleuchtungsstärke und/oder die Bestrahlungsstärke, usw. und/oder als Größe zumindest eine durch die auftreffende Strahlung hervorgerufene Wirkung, wie z.B. ein Potostrom einer Photodiode 26, zu messen. Für die erfasste Größe kann beispielsweise ein Wertebereich festgelegt werden, indem der Wert der erfassten Größe liegen muss, um auf einen funktionsgemäßen, defektlosen Betrieb der Beleuchtungseinrichtung 10 zu schließen. Wird dieser vorbestimmte Wertebereich verlassen, d.h. überschreitet oder unterschreitet beispielsweise die erfasste Strahlungsintensität oder der gemessene Photostrom einer oder mehrerer Photodioden einen vorbestimmten Grenzwert, so kann dadurch auf einen Defekt der Beleuchtungseinrichtung 10 geschlossen werden.

Bevorzugt ist die Beleuchtungseinrichtung 10 weiterhin derart ausgestaltet, dass die Mikrospiegel 22 im Betrieb der Beleuchtungseinrichtung 10 wiederholt, z.B. in vorbestimmten Zeitabständen, regelmäßig, periodisch und/oder nach einem vorbestimmten Schema, von der Ein-Position und/oder der Aus-Position, bevorzugt jedoch nur von der Ein-Position, in die Sicherheitsposition für eine vorbestimmte Zeitdauer gedreht werden. So kann vorteilhafterweise während des Betriebs der Beleuchtungseinrichtung 10 eine permanent wiederholte Überprüfung auf mögliche Fehler bzw. Defekte der Beleuchtungseinrichtung 10 erfolgen, beispielsweise mit einer Wiederholrate im Millisekundenbereich, z.B. alle 100 ms. Besonders vorteilhaft ist es dabei, wenn sich die Sicherheitsposition nur geringfügig von der Ein-Position unterscheidet und die Mikrospiegel 22, z.B. in vorbestimmten Zeitabständen, von der Ein-Position in die Sicherheitsposition für eine vorbestimmte Zeitdauer gedreht werden. Beispielsweise kann sich die Ein-Position von der Sicherheitsposition nur um einen Drehwinkel von zum Beispiel 1° bis 3° bezüglich der Drehung des jeweiligen Mikrospiegels 22 unterscheiden. Die Auslenkung der Mikrospiegel 22 von der Ein-Position in die Sicherheitsposition lässt sich damit äußerst einfach und vor allem schnell bewerkstelligen, wodurch auftretende Strahlungsverluste vorteilhafterweise minimiert werden können. Die Beleuchtungseinrichtung 10 kann dabei z.B. derart ausgestaltet sein, dass die Mikrospiegel 22, wenn sie sich für wenige Sekunden in der Ein-Position befunden haben, für einen kurzen Moment in die Sicherheitsposition gedreht werden, und dies fortwährend wiederholt. In Fig. 3 ist zur Veranschaulichung dieser geringen Positionsabweichung zum Vergleich noch der Strahlverlauf der Strahlung, die von den in der Ein-Position befindlichen Mikrospiegeln 22 reflektiert wurde, gestrichelt dargestellt.

Um die Fehlerdetektion weiter zu optimieren, kann die Mikrospiegelanordnung 20 in Teilbereiche 20a (vgl. Fig. 4) gegliedert sein, die jeweils zeitlich versetzt den Anteil der Strahlung zum Messen auf die Sensoreinrichtung 24 lenken.

Fig. 4 zeigt dabei eine schematische Darstellung einer Mikrospiegelanordnung 20 einer Beleuchtungseinrichtung 10 gemäß einem Ausführungsbeispiel der Erfindung. Die Mikrospiegelanordnung 20 umfasst dabei wiederum eine Vielzahl von Mikrospiegeln 22, die aufgrund ihrer geringen Größe, insbesondere in einer Größenordnung von Mikrometern, z.B. mit einer Kantenlänge von 14 µm bis 16 µm, hier nicht explizit einzeln dargestellt sind. Die Mikrospiegel 22 können dabei in Form eines Arrays, das heißt in Zeilen und Spalten, angeordnet sein. Die Mikrospiegel 22 sind weiterhin bevorzugt eben ausgebildet und in ihrer Formgebung gleichartig, beispielsweise rechteckförmig oder quadratisch. Weiterhin besitzt die Mikrospiegelanordnung 20 in diesem Beispiel ebenfalls eine rechteckförmige Geometrie, wobei die Mikrospiegelanordnung 20 auch beliebig anders ausgestaltet sein kann, wie beispielsweise kreisförmig, d.h. mit unterschiedlich langen Zeilen und/oder Spalten. Die Mikrospiegelanordnung 20 ist nun, wie in Fig. 4 dargestellt, in mehrere Teilbereiche 20a unterteilt, wobei aus Gründen der Übersichtlichkeit nur ein Telbereich 20a mit einem Bezugszeichen versehen ist. Jeder dieser Teilbereiche 20a umfasst dabei mindestens einen Mikrospiegel 22, bevorzugt jedoch vielzählige, insbesondere ausschließlich benachbart angeordnete Mikrospiegel 22, so dass die Teilbereiche 20a als jeweils zusammenhängende Teilbereiche 20a der Mikrospiegelanordnung 20 zu verstehen sind, was eine bereichsweise Ansteuerung der Mikrospiegel 22 vereinfacht. Diese Teilbereiche 20a können nun während des Betriebs der Beleuchtungseinrichtung 10 sukzessive in einer zeitlichen Abfolge von ihrer Ein- und/oder Aus-Position, insbesondere je nachdem in welcher Position sie sich gerade befinden, in die Sicherheitsposition gedreht werden. Wird ein Teilbereich 20a von der Ein-Position bzw. Aus-Position in die Sicherheitsposition gedreht, ist dies so zu verstehen, dass alle in diesem Teilbereich 20a befindlichen Mikrospiegel 22 sich in der Ein- bzw. Aus-Position befinden und in die Sicherheitsposition gedreht werden. Die Sensoreinrichtung 24 kann dann für jeden Teilbereich 20a einzeln überprüfen, ob die detektierte Strahlung sich hinsichtlich ihrer Strahlungsintensität in einem Normbereich befindet, wobei insbesondere für jeden Teilbereich 20a ein eigens vorbestimmter Normbereich bzw. definierter Wertebereich vorbestimmt sein kann. Durch die Unterteilung der Mikrospiegelanordnung 20 in unterschiedliche Teilbereiche 20a kann es somit vorteilhafterweise bewerkstelligt werden, eventuelle Konvertierungsdefekte genau zu lokalisieren. Weiterhin kann die Sensoreinrichtung 24 mit einer nicht dargestellten Steuereinrichtung gekoppelt sein, die bei einer Fehlerdetektion die Laserlichtquellen 12a,12b, 12c sicher deaktiviert, d.h. insbesondere ein sofortiges Abschalten dieser bewirkt. Fehler bei der Konvertierung können damit auf äußerst präzise und sichere Weise erfasst werden.

Insgesamt wird so eine Beleuchtungseinrichtung bereitgestellt, die dadurch, dass die ebenen Mikrospiegel im Vergleich zu den früheren Reflektorspiegeln in mehrere Positionen schwenkbar sind, eine dynamische und hoch aufgelöste Lichtlenkung ermöglicht. Neben der reinen An- und Abschaltung kann durch eine zusätzliche Sicherheitsposition der Mikrospiegel in Verbindung mit einem Sensor vorteilhafterweise regelmäßig die Zusammensetzung der Strahlung überprüft werden, und damit die Strahlung auf eventuelle Anteile nicht konvertierbarer Laserstrahlung überprüft werden.

## Patentansprüche

1. Beleuchtungseinrichtung (10) für ein Kraftfahrzeug, wobei die Beleuchtungseinrichtung (10) eine Laserlichtquelle (12a; 12b; 12c), welche dazu ausgelegt ist, Anregungsstrahlung mit zumindest einer ersten Wellenlänge abzustrahlen, und ein Wellenlängenkonversionselement (14) umfasst, das dazu ausgelegt ist, auf das Wellenlängenkonversionselement (14) auftreffende Strahlung mit zumindest der ersten Wellenlänge in Strahlung mit zumindest einer von der ersten Wellenlänge verschiedenen zweiten Wellenlänge zu konvertieren und zu emittieren, wobei die Beleuchtungseinrichtung (10) derart eingerichtet ist, dass von der Laserlichtquelle (12a; 12b; 12c) abgestrahltes Anregungslicht zumindest zum Teil auf das Wellenlängenkonversionselement (14) trifft, und wobei die Beleuchtungseinrichtung (10) eine Sensoreinrichtung (24) zur Überprüfung einer Zusammensetzung der Strahlung aufweist,
**dadurch gekennzeichnet, dass**
die Beleuchtungseinrichtung (10) eine Mikrospiegelanordnung (20) mit einer Mehrzahl an Mikrospiegeln (22) aufweist, um vom Wellenlängenkonversionselement (14) emittierte Strahlung zu reflektieren, wobei die Mikrospiegel (22) relativ zum Wellenlängenkonversionselement (14) bewegbar angeordnet sind, wobei die Beleuchtunseinrichtung (10) derart eingerichtet ist, dass bei funktionsgemäßen Betrieb der Beleuchtungseinrichtung die Mikrospiegel (22) wiederholt zumindest zeitweise und in vorbestimmten Zeitabständen von einem jeweiligen ersten Positionsbereich und/oder zweiten Positionsbereich in einen dritten, vom ersten und zweiten Positionsbereich verschiedenen, Positionsbereich bewegt werden, wobei ein jeweiliger Mikrospiegel (22) im dritten Positionsbereich derart angeordnet ist, dass er bei funktionsgemäßem Betrieb der Beleuchtungseinrichtung (10) vom Wellenlängenkonversionselement (14) emittierte und auf die Mikrospiegel (22) auftreffende Strahlung zum Großteil auf die Sensoreinrichtung (24) reflektiert.

2. Beleuchtungseinrichtung (10) nach Anspruch 1,
wobei die Mikrospiegel (22) unabhängig voneinander bewegbar sind.

3. Beleuchtungseinrichtung (10) nach Anspruch 1,
wobei die Beleuchtungseinrichtung (10) derart eingerichtet ist, dass die Mikrospiegelanordnung (20) in mehrere Ansteuerbereiche (20a), die jeweils mehrere der Mikrospiegel (22) umfassen, unterteilt ist, so dass die in einem selben Ansteuerbereich (20a) befindlichen Mikrospiegel kollektiv ansteuerbar sind, um eine Position der Mikrospiegel (22) eines Ansteuerbereichs (20a) einzustellen und/oder zu ändern.

4. Beleuchtungseinrichtung (10) nach einem der vorhergehenden Ansprüche,
wobei die Beleuchtungseinrichtung (10) eine Steuereinrichtung aufweist, die dazu ausgelegt ist, die Mikrospiegel (22) im Betrieb der Beleuchtungseinrichtung (10) in Abhängigkeit von einer vorbestimmten, zeitlich variablen und mittels der Beleuchtungseinrichtung (10) zu erzeugenden Beleuchtungsstärkeverteilung in ihrer jeweiligen Position relativ zum Wellenlängenkonversionselement (14) einzustellen.

5. Beleuchtungseinrichtung (10) nach einem der vorhergehenden Ansprüche,
wobei die Beleuchtungseinrichtung (10) derart eingereichtet ist, dass sich ein jeweiliger Mikrospiegel (22) in einem ersten Zustand in dem dem jeweiligen Mikrospiegel (22) zugeordneten ersten Positionsbereich befindet, wobei der jeweilige Mikrospiegel (22) im ersten Positionsbereich derart angeordnet ist, dass er bei funktionsgemäßem Betrieb der Beleuchtungseinrichtung (10) vom Wellenlängenkonversionselement (14) emittierte und den Mikrospiegel (22) auftreffende Strahlung zum Großteil und zumindest mittelbar zu einer Austrittsöffnung der Beleuchtungseinrichtung (10) reflektiert.

6. Beleuchtungseinrichtung (10) nach einem der vorhergehenden Ansprüche,
wobei die Beleuchtungseinrichtung (10) derart eingereichtet ist, dass sich ein jeweiliger Mikrospiegel (22) in einem zweiten, vom ersten verschiedenen Zustand in dem dem jeweiligen Mikrospiegel (22) zugeordneten zweiten Positionsbereich, der vom ersten Positionsbereich verschieden ist, befindet, wobei der jeweilige Mikrospiegel (22) im zweiten Positionsbereich derart angeordnet ist, dass bei funktionsgemäßem Betrieb der Beleuchtungseinrichtung (10) vom Wellenlängenkonversionselement (14) emittierte und auf den Mikrospiegel (22) auftreffende Strahlung mittels des Mikrospiegels zum Großteil nicht zu der Austrittsöffnung der Beleuchtungseinrichtung (10) reflektierbar ist.

7. Beleuchtungseinrichtung (10) nach einem der Ansprüche 4 bis 6,
wobei die Sensoreinrichtung dazu ausgelegt ist, einen aktuellen Wert einer physikalischen Größe der auf die Sensoreinrichtung auftreffenden Strahlung zu erfassen und zu überprüfen, ob der Wert innerhalb eines vorbestimmten Wertebereichs liegt, wobei insbesondere die Sensoreinrichtung (24) mit der Steuereinrichtung gekoppelt ist und die Steuereinrichtung dazu ausgelegt ist, die Laserlichtquelle (12a; 12b; 12c) zu deaktivieren, falls ein aktuell erfasster Wert nicht innerhalb des vorbestimmten Wertebereichs liegt.

8. Beleuchtungseinrichtung (10) nach einem der Ansprüche 4 bis 7,
wobei die Mikrospiegelanordnung (20) in mehrere Teilbereiche (20a) gegliedert ist, wobei jeder Teilbereich (20a) mindestens einen Mikrospiegel (22) umfasst, wobei die Steuereinrichtung dazu ausgelegt ist, die Mikrospiegelanordnung (20) derart anzusteuern, dass die Mikrospiegel (22) unterschiedlicher Teilbereiche (20a) zeitlich voneinander versetzt vom ersten Positionsbereich und/oder zweiten Positionsbereich für eine vorbestimmte Zeitdauer in den dritten Positionsbereich bewegt werden.

9. Kraftfahrzeug mit einem Scheinwerfer, der eine Beleuchtungseinrichtung (10) nach einem der vorhergehenden Ansprüchen aufweist.

10. Kraftfahrzeug nach Anspruch 9, wobei das Kraftfahrzeug eine Erfassungseinrichtung aufweist, die dazu ausgelegt ist, Informationen über einen Fahrbahnverlauf und/oder andere Verkehrsteilnehmer und/oder eine aktuell befahrene Fahrspur und/oder eine aktuelle Verkehrssituation und/oder eine Fehlfunktion des Kraftfahrzeugs und/oder eine sicherheitskritische Situation zu erfassen und der Beleuchtungseinrichtung (10) bereitzustellen, wobei die Beleuchtungseinrichtung (10) dazu ausgelegt, ist in Abhängigkeit von der bereitgestellten Information eine Beleuchtungsstärkeverteilung durch eine korrespondierende Einstellung der Mirkospiegel (22) in ihrer Position derart bereitzustellen, dass eine zu befahrende Ideallinie und/oder eine aktuelle, zu erwartende Fahrlinie und/oder Navigationsinformationen und/oder Warnhinweise und/oder Hinweise auf eine aktuelle Verkehrssituation und/oder Symbole und/oder eine auf vorausfahrende Fahrzeuge und/oder den Fahrbahnverlauf angepasste Beleuchtungsstärkeverteilung auf eine aktuell befahrene Fahrbahn projiziert wird.

11. Verfahren zum Betreiben einer Beleuchtungseinrichtung (10) für ein Kraftfahrzeug, wobei die Beleuchtungseinrichtung (10) eine Laserlichtquelle (12a; 12b; 12c) aufweist, die im Betrieb der Beleuchtungseinrichtung (10) Anregungsstrahlung mit zumindest einer ersten Wellenlänge abstrahlt, und ein Wellenlängenkonversionselement (14) aufweist, das auf das Wellenlängenkonversionselement (14) auftreffende Strahlung mit zumindest der ersten Wellenlänge in Strahlung mit zumindest einer von der ersten Wellenlänge verschiedenen zweiten Wellenlänge konvertiert und emittiert, wobei die Beleuchtungseinrichtung (10) derart eingerichtet ist, dass von der Laserlichtquelle (12a; 12b; 12c) abgestrahltes Anregungslicht zumindest zum Teil auf das Wellenlängenkonversionselement (14) trifft, und wobei die Beleuchtungseinrichtung (10) eine Sensoreinrichtung (24) zur Überprüfung einer Zusammensetzung der Strahlung aufweist,
**dadurch gekennzeichnet, dass**
die Beleuchtungseinrichtung (10) eine Mikrospiegelanordnung (20) mit einer Mehrzahl von Mikrospiegeln (22) aufweist, um vom Wellenlängenkonversionselement (14) emittierte Strahlung zu reflektieren, wobei die Mikrospiegel (22) im Betrieb der Beleuchtungseinrichtung (10) relativ zum Wellenlängenkonversionselement (14) bewegt werden, wobei bei funktionsgemäßen Betrieb der Beleuchtungseinrichtung die Mikrospiegel (22) zumindest wiederholt zeitweise und in vorbestimmten Zeitabständen von einem jeweiligen ersten Positionsbereich und/oder zweiten Positionsbereich in einen dritten, vom ersten und zweiten Positionsbereich verschiedenen, Positionsbereich bewegt werden, wobei ein jeweiliger Mikrospiegel (22) im dritten Positionsbereich bei funktionsgemäßem Betrieb der Beleuchtungseinrichtung (10) vom Wellenlängenkonversionselement (14) emittierte und auf die Mikrospiegel (22) auftreffende Strahlung zum Großteil auf die Sensoreinrichtung (24) reflektiert.

## Claims

1. Lighting device (10) for a motor vehicle, wherein the lighting device (10) comprises a laser light source (12a; 12b; 12c), which is designed to emit excitation radiation of at least one first wavelength, and a wavelength conversion element (14), which is designed to convert radiation of at least the first wavelength incident on the wavelength conversion element (14) into radiation of at least one second wavelength that differs from the first wavelength and to emit the radiation, wherein the lighting device (10) is designed in such a way that excitation light emitted by the laser light source (12a; 12b; 12c) at least partly strikes the wavelength conversion element (14). and wherein the lighting device (10) has a sensor device (24) for checking a composition of the radiation,
**characterised in that**
the lighting device (10) has a micromirror arrangement (20) having a plurality of micromirrors (22), in order to reflect radiation emitted by the wavelength conversion element (14), wherein the micromirrors (22) are arranged movably relative to the wavelength conversion element (14), wherein the lighting device (10) is configured in such a way that in functional operation of the lighting device the micromirrors (22) are repeatedly moved at least intermittently and at predetermined time intervals from a respective first positioning area and/or second positioning area into a third positioning area different from the first and second positioning area, wherein a respective micromirror (22) is arranged in the third positioning area in such a way that, in functional operation of the lighting device (10), radiation emitted by the wavelength conversion element (14) and incident on the micromirrors (22) is predominantly reflected on the sensor device (24).

2. Lighting device (10) according to claim 1,
wherein the micromirrors (22) are movable independently of one another.

3. Lighting device (10) according to claim 1,
wherein the lighting device (10) is configured in such a way that the micromirror arrangement (20) is divided into a plurality of activation areas (20a), which each comprise a plurality of micromirrors (22), so that the micromirrors located in the same activation area (20a) can be collectively controlled, in order to set and/or to change a position of the micromirror (22) of an activation area (20a).

4. Lighting device (10) according to any of the preceding claims,
wherein the lighting device (10) has a control device which is designed to set the micromirrors (22) in their respective position relative to wavelength conversion element (14) during operation of the lighting device (10) as a function of a predetermined, chronologically variable lighting intensity distribution to be generated by means of the lighting device (10).

5. Lighting device (10) according to any of the preceding claims,
wherein the lighting device (10) is configured in such a way that a respective micromirror (22) in a first state is located in the first positioning area associated with the respective micromirror (22), wherein the respective micromirror (22) is arranged in the first positioning area in such a way that, in functional operation of the lighting device (10), radiation emitted by the wavelength conversion element (14) and incident on the micromirror (22) is reflected predominantly and at least indirectly to an outlet opening of the lighting device (10).

6. Lighting device (10) according to any of the preceding claims,
wherein the lighting device (10) is configured in such a way that a respective micromirror (22), in a second state different from the first state, is located in the second positioning area which is associated with the respective micromirror (22) and is different from the first positioning area, wherein the respective micromirror (22) is arranged in the second positioning area in such a way that, in functional operation of the lighting device (10), radiation emitted by the wavelength conversion element (14) and incident on the micromirror (22) cannot be reflected by means of the micromirror predominantly to an outlet opening of the lighting device (10).

7. Lighting device (10) according to any of claims 4 to 6,
wherein the sensor device is designed to detect a current value of a physical quantity of the radiation incident on the sensor device and to check whether the value lies within a predetermined value range, wherein in particular the sensor device (24) is coupled to the control device, and the control device is designed to deactivate the laser light source (12a; 12b; 12c) if a currently detected value does not lie within the predetermined value range.

8. Lighting device (10) according to any of claims 4 to 7,
wherein the micromirror arrangement (20) is divided into a plurality of sub-areas (20a), wherein each sub-area (20a) comprises at least one micromirror (22), wherein the control device is designed to activate the micromirror arrangement (20) in such a way that the micromirrors (22) of different sub-areas (20a) are moved at different times from one another in a from the first positioning area and/or second positioning area for a predetermined time period into the third positioning area.

9. Motor vehicle with a headlamp which has a lighting device (10) according to any of the preceding claims.

10. Motor vehicle according to claim 9,
wherein the motor vehicle has a detection device which is designed to provide information to the lighting device (10) concerning the course of a road and/or other road users and/or a traffic lane currently being driven on and/or a current traffic situation and/or a malfunction of the motor vehicle and/or a safety-critical situation, wherein the lighting device (10) is designed to provide a lighting intensity distribution by a corresponding setting of the micromirrors (22) in their position as a function of the information provided in such a way that an ideal line to be driven and/or a current driving line to be expected and/or navigation information and/or warning signs and/or indications of a current traffic situation and/or symbols and/or a lighting intensity distribution adapted to vehicles travelling in front and/or the course of the road is projected onto a road currently being driven on.

11. Method for operating a lighting device (10) for a motor vehicle,
wherein the lighting device (10) comprises a laser light source (12a; 12b; 12c), which in operation of the lighting device (10) emits excitation radiation of at least one first wavelength, and has a wavelength conversion element (14), which converts and emits radiation of at least the first wavelength incident on the wavelength conversion element (14) into radiation of at least one second wavelength which is different from the first wavelength, wherein the lighting device (10) is designed in such a way that excitation light emitted by the laser light source (12a; 12b; 12c) at least partly strikes the wavelength conversion element (14). and wherein the lighting device (10) has a sensor device (24) for checking a composition of the radiation,
**characterised in that**
the lighting device (10) has a micromirror arrangement (20) having a plurality of micromirrors (22), in order to reflect radiation emitted by the wavelength conversion element (14), wherein in operation of the lighting device (10) the micromirrors (22) are moved relative to the wavelength conversion element (14), wherein in functional operation of the lighting device the micromirrors (22) are at least repeatedly moved intermittently and at predetermined time intervals from a respective first positioning area and/or second positioning area into a third positioning area different from the first and second positioning area, wherein, in functional operation of the lighting device (10), a respective micromirror (22) in the third positioning area reflects radiation emitted by the wavelength conversion element (14) and incident on the micromirrors (22) predominantly onto the sensor device (24).

## Revendications

1. Dispositif d'éclairage (10) pour un véhicule automobile,
dans lequel le dispositif d'éclairage (10) comprend une source de lumière laser (12a ; 12b ; 12c), qui est conçue pour émettre un rayonnement d'excitation avec au moins une première longueur d'onde, et un élément de conversion de longueur d'onde (14), qui est conçu pour convertir un rayonnement arrivant sur l'élément de conversion de longueur d'onde (14) avec au moins la première longueur d'onde en un rayonnement avec au moins une deuxième longueur d'onde différente de la première longueur d'onde, et pour l'émettre,
dans lequel le dispositif d'éclairage (10) est réalisé de telle sorte qu'une lumière d'excitation émise par la source de lumière laser (12a ; 12b ; 12c) arrive au moins en partie sur l'élément de conversion de longueur d'onde (14),
et dans lequel le dispositif d'éclairage (10) comporte un dispositif capteur (24) afin de vérifier une composition du rayonnement,
**caractérisé en ce que**
le dispositif d'éclairage (10) comporte un agencement de micromiroirs (20) avec une multiplicité de micromiroirs (22) pour réfléchir un rayonnement émis par l'élément de conversion de longueur d'onde (14),
dans lequel les micromiroirs (22) sont agencés de manière à pouvoir être déplacés par rapport à l'élément de conversion de longueur d'onde (14),
dans lequel le dispositif d'éclairage (10) est réalisé de telle sorte que, lors du fonctionnement normal du dispositif d'éclairage, les micromiroirs (22) sont déplacés de manière répétée au moins temporairement et à des intervalles de temps prédéterminés d'une première zone de position respective et/ou deuxième zone de position respective à une troisième zone de position différente de la première et de la deuxième zone de position, dans lequel un micromiroir (22) respectif est agencé de telle sorte dans la troisième zone de position que, lors du fonctionnement normal du dispositif d'éclairage (10), il réfléchit un rayonnement émis par l'élément de conversion de longueur d'onde (14) et arrivant sur les micromiroirs (22) en grande partie sur le dispositif capteur (24).

2. Dispositif d'éclairage (10) selon la revendication 1, dans lequel les micromiroirs (22) peuvent être déplacés indépendamment les uns des autres.

3. Dispositif d'éclairage (10) selon la revendication 1, dans lequel le dispositif d'éclairage (10) est réalisé de telle sorte que l'agencement de micromiroirs (20) est divisé en plusieurs zones de commande (20a) qui comprennent chacune plusieurs des micromiroirs (22) de telle sorte que les micromiroirs situés dans une même zone de commande (20a) peuvent être commandés collectivement pour régler et/ou modifier une position des micromiroirs (22) d'une zone de commande (20a).

4. Dispositif d'éclairage (10) selon l'une quelconque des revendications précédentes, dans lequel le dispositif d'éclairage (10) comporte un dispositif de commande qui est conçu pour régler les micromiroirs (22) quant à leur position respective par rapport à l'élément de conversion de longueur d'onde (14) lors du fonctionnement du dispositif d'éclairage (10) en fonction d'une répartition d'intensité d'éclairage prédéterminée, variable dans le temps et devant être produite au moyen du dispositif d'éclairage (10).

5. Dispositif d'éclairage (10) selon l'une quelconque des revendications précédentes, dans lequel le dispositif d'éclairage (10) est réalisé de telle sorte qu'un micromiroir (22) respectif se trouve dans un premier état dans la première zone de position associée au micromiroir (22) respectif, dans lequel le micromiroir (22) respectif est agencé de telle manière dans la première zone de position que, lors du fonctionnement normal du dispositif d'éclairage (10), il réfléchit un rayonnement, émis par l'élément de conversion de longueur d'onde (14) et arrivant sur le micromiroir (22), en grande partie et au moins indirectement vers une ouverture de sortie du dispositif d'éclairage (10).

6. Dispositif d'éclairage (10) selon l'une quelconque des revendications précédentes, dans lequel le dispositif d'éclairage (10) est réalisé de telle sorte qu'un micromiroir (22) respectif se trouve dans un deuxième état, différent du premier, dans la deuxième zone de position associée au micromiroir (22) respectif et différente de la première zone de position, dans lequel le micromiroir (22) respectif est agencé de telle manière dans la deuxième zone de position que, lors du fonctionnement normal du dispositif d'éclairage (10), un rayonnement, émis par l'élément de conversion de longueur d'onde (14) et arrivant sur le micromiroir (22), peut au moyen du micromiroir ne pas être réfléchi en grande partie vers l'ouverture de sortie du dispositif d'éclairage (10).

7. Dispositif d'éclairage (10) selon l'une quelconque des revendications 4 à 6, dans lequel le dispositif capteur est conçu pour détecter une valeur actuelle d'une grandeur physique du rayonnement arrivant sur le dispositif capteur et pour vérifier si la valeur se trouve dans une plage de valeur prédéterminée, dans lequel en particulier le dispositif capteur (24) est couplé au dispositif de commande et le dispositif de commande est conçu pour désactiver la source de lumière laser (12a ; 12b ; 12c) si une valeur actuellement détectée ne se trouve pas dans la plage de valeur prédéterminée.

8. Dispositif d'éclairage (10) selon l'une quelconque des revendications 4 à 7, dans lequel l'agencement de micromiroirs (20) est divisé en plusieurs sous-zones (20a), dans lequel chaque sous-zone (20a) comprend au moins un micromiroir (22), dans lequel le dispositif de commande est conçu pour commander l'agencement de micromiroirs (20) de telle sorte que les micromiroirs (22) de différentes sous-zones (20a) sont déplacés de manière décalée dans le temps les uns par rapport aux autres de la première zone de position et/ou deuxième zone de position à la troisième zone de position pour une durée prédéterminée.

9. Véhicule automobile avec un phare, qui comporte un dispositif d'éclairage (10) selon l'une quelconque des revendications précédentes.

10. Véhicule automobile selon la revendication 9, dans lequel le véhicule automobile comporte un dispositif de détection qui est conçu pour détecter des informations concernant une allure de chaussée et/ou d'autres usagers de la route et/ou une voie de circulation actuellement suivie et/ou une situation de circulation actuelle et/ou un dysfonctionnement du véhicule automobile et/ou une situation critique pour la sécurité et pour les mettre à disposition du dispositif d'éclairage (10), dans lequel le dispositif d'éclairage (10) est conçu pour, en fonction de l'information mise à disposition, fournir une répartition d'intensité d'éclairage telle, grâce à un réglage correspondant des micromiroirs (22) quant à leur position, qu'une ligne idéale à suivre et/ou une ligne de circulation actuelle escomptée et/ou des informations de navigation et/ou des indications d'avertissement et/ou des indications concernant une situation de circulation actuelle et/ou des symboles et/ou une répartition d'intensité d'éclairage adaptée à des véhicules circulant devant et/ou à l'allure de chaussée est projeté sur une chaussée actuellement suivie.

11. Procédé de fonctionnement d'un dispositif d'éclairage (10) pour un véhicule automobile, dans lequel le dispositif d'éclairage (10) comporte une source de lumière laser (12a ; 12b ; 12c) qui, lors du fonctionnement du dispositif d'éclairage (10), émet un rayonnement d'excitation avec au moins une première longueur d'onde, et un élément de conversion de longueur d'onde (14), qui convertit un rayonnement arrivant sur l'élément de conversion de longueur d'onde (14) avec au moins la première longueur d'onde en un rayonnement avec au moins une deuxième longueur d'onde différente de la première longueur d'onde, et l'émet, dans lequel le dispositif d'éclairage (10) est réalisé de telle sorte qu'une lumière d'excitation émise par la source de lumière laser (12a ; 12b ; 12c) arrive au moins en partie sur l'élément de conversion de longueur d'onde (14), et dans lequel le dispositif d'éclairage (10) comporte un dispositif capteur (24) afin de vérifier une composition du rayonnement,
**caractérisé en ce que**
le dispositif d'éclairage (10) comporte un agencement de micromiroirs (20) avec une multiplicité de micromiroirs (22) pour réfléchir un rayonnement émis par l'élément de conversion de longueur d'onde (14),
dans lequel les micromiroirs (22) sont déplacés par rapport à l'élément de conversion de longueur d'onde (14) lors du fonctionnement du dispositif d'éclairage (10),
dans lequel, lors du fonctionnement normal du dispositif d'éclairage, les micromiroirs (22) sont déplacés de manière répétée au moins temporairement et à des intervalles de temps prédéterminés d'une première zone de position respective et/ou deuxième zone de position respective à une troisième zone de position différente de la première et de la deuxième zone de position, dans lequel un micromiroir (22) respectif dans la troisième zone de position réfléchit, lors du fonctionnement normal du dispositif d'éclairage (10), un rayonnement émis par l'élément de conversion de longueur d'onde (14) et arrivant sur les micromiroirs (22) en grande partie sur le dispositif capteur (24).
